# EUROPEAN PATENT SPECIFICATION

(11) **EP 2 337 142 B1**
(45) Date of publication and mention of the grant of the patent: **21.08.2013**
(21) Application number: 10194769.5
(22) Date of filing: 13.12.2010
(51) Int. Cl.: H01M 10/50, H01M 2/10, B60L 3/00, B60L 11/18

(54) **A cooling apparatus for a vehicle drive battery and a vehicle drive battery assembly including a cooling apparatus.**
Kühlvorrichtung für eine Fahrzeugantriebsbatterie und Fahrzeugantriebsbatteriebaugruppe mit Kühlvorrichtung
Appareil de refroidissement pour batterie de commande de véhicule et ensemble formant batterie de commande de véhicule l'incluant

(30) Priority: 18.12.2009 DE 102009058808
(43) Date of publication of application: 22.06.2011
(73) Proprietor: Valeo Klimasysteme GmbH, 96476 Rodach (DE)
(72) Inventor: Haussmann, Roland, 69168, WIESLOCH (DE)
(74) Representative: Vieillevigne, Sébastien Nicolas Bernard

(56) References cited:
- EP-A1- 1 274 137
- EP-A1- 2 104 121
- DE-A1-102008 059 953

## Description

The invention relates to a cooling apparatus for a vehicle drive battery having a plurality of battery cells arranged next to each other. Moreover, the invention relates to a vehicle drive battery assembly having a cooling apparatus according to the present invention.

Vehicle drive batteries for purely electric, fuel cell or hybrid vehicles are at the focus of development efforts for vehicles having alternative drive systems. The life cycle of the battery depends to a large degree on the thermal stresses on the battery cells during charging and discharging. This applies in particular to lithium ion batteries and NiMH batteries. In order to preserve the performance of the battery, heating of the battery cells beyond their maximum temperature of 45°C to 60°C or any self-heating has to be avoided.

A further cause for the reduction of the long term performance is an inhomogeneous temperature distribution from one cell to another. In this respect, any occurrences of temperature differentials of more than 5°C between cells have to be avoided. In this context it is to be noted that the cells are usually connected in series, so that a defective cell can cause a total failure of the battery.

The invention relates in particular to a cooling apparatus for a vehicle drive battery as well as to a vehicle drive battery assembly having cylindrical, in particular block-shaped battery cells. The novel block-shaped battery cells are characterised by the fact that they have a very small package volume compared to the battery cells which to date have usually been circular-cylindrical.

Whilst the lateral surface of the circular-cylindrical battery cells are surrounded by laminar cooling plates, in order to cool a portion of the lateral surface which is as large as possible, cooling of one of the flat surfaces, in particular an end face of the battery is sufficient in the case of the block-shaped battery cells.

The invention is based on the object of providing a cooling apparatus for a vehicle drive battery, which has a simpler design, a weight that is as low as possible and above all a high performance, as well as a vehicle drive battery assembly which is characterised by a reliable long term performance due to its good battery cooling.

This is achieved by means of a cooling apparatus for a vehicle drive battery having a plurality of especially block-shaped battery cells arranged next to each other, which have a lateral surface, a top end wall and a bottom end wall. The vehicle drive battery for the cooling apparatus has an essentially flat underside. The cooling apparatus itself comprises at least one cooling base which bears extensively against the underside of the battery, at least one coolant pipe, at least one heat conducting contact plate for contact with the underside of the battery and at least one carrier component that has a lower thermal conductivity than the contact plate and forms a bracket for the coolant pipe and the contact plate. The cooling base is formed to be spring elastic relative to the underside of the battery, so that the contact plate can be pre-biased and bear extensively against the underside.

The cooling apparatus according to the invention comprises a cooling base that is used in particular for cooling the bottom end walls of battery cells, which is, however, not limiting in any way. Equally, portions of the flat lateral surface sections could be facing the cooling base. The term "bottom" consequently relates to a horizontally orientated cooling base, on which the battery is supported. The cooled contacting side of the battery is then the underside. What is important is that the cooling base itself is formed to be spring elastic, so that the contact plate may rest on the battery with as much of its surface as possible. Solutions provided so far often used non-elastic plates, so that tolerances could cause heat insulating air gaps to occur, which considerably reduces the cooling effect. This is effectively avoided by means of the spring elastic formation of the cooling base. The cooling base is of a very simple design, since it has a carrier component, a coolant pipe as well as the contact plate, via which the heat is transferred directly to the cooling fluid in the coolant pipe. The carrier component has a relatively low thermal conductivity, in any case one that is lower than that of the contact plate, and has thus an insulating effect, as a result of which it may be manufactured from a plastics material in a cost-effective manner and above all in a light-weight design.

The cooling base should be a prefabricated, self-supporting unit.

According to one embodiment, the contact plate is a formed sheet, preferably from aluminium or copper.

The contact plate may have a first contact zone for heat transfer to the coolant pipe as well as at least one second contact zone for heat transfer from the vehicle drive battery. In the area of the first contact zone, the sheet encompasses sections of the coolant pipe. The heat is transferred from the contact plate into the coolant pipe, which two parts do not necessarily have to be connected to each other to form a single piece, but could also be made up of several pieces. However, since the contact plate encompasses the coolant pipe in sections, a large heat transfer surface is obtained, so that a fast heat transfer from the contact plate to the tubular coolant pipe is made possible.

Preferably, but this does not necessarily have to be the case, exclusively a positive connection between the contact plate and the coolant pipe is provided.

The shape of the contact plate is in particular exactly adapted to the shape of the coolant pipe, so that a contact zone over the entire surface is achieved.

In order to avoid minute air gaps, a heat conducting paste may alternatively be provided between the contact plate and the coolant pipe.

The contact plate may be implemented as an elastically deformable plate that is capable of optimally adapting to the shape of the underside of the battery.

In this context, several different concepts are conceivable. On the one hand, the carrier component itself may be implemented to be rigid, so that the elasticity of the cooling base is achieved exclusively by means of the elastic contact plate. Alternatively, it would also be possible to implement the contact plate to be relatively rigid and the carrier component to be elastic. In this variant, the spring elasticity would be achieved by means of the elastic carrier component which is pre-biased and pushes against the underside of the battery. A further idea would be to implement both the contact plate and the carrier component to be elastic, so that both parts contribute towards the elasticity of the cooling base and the extensive contact between the cooling base and the battery.

The elasticity of the contact plate in the area of its contact zone with the underside may be achieved by means of the fact that the contact plate extends at an angle relative to the underside, which is at an angle of 0.5° to 10°, preferably 1° to 2° relative to the underside, if the battery is horizontally orientated. As a result of this angular orientation, a type of spring effect is achieved, similar to a leaf spring that is slightly upwardly bent. This leaf spring will have its first contact with the underside at its highest point, and its spring action will then take it further down as the pre-biasing force increases, so that the contact surface continuously increases. This embodiment ensures in a simple manner a full-surface contact with the underside of the battery.

A further embodiment of the invention provides in this context that at the centre of the contact plate, the coolant pipe and the contact plate itself extend from the centre on both sides at an angle in the direction of the underside. This results in a slight V-shape. Thus, the contact plate receives two "wings", so that the entire contact surface will be enlarged.

The contact plate can bear with its front or rear side in a preferably elastically pre-biased manner against the coolant pipe. It is possible here that the elasticity of the cooling base, when this is pushed against the underside, also causes a contact pressing force between the contact plate and the coolant pipe so that here, too, a secure contact over the entire surface is made possible.

For an optimised positioning of the contact plate, the latter may include at least one tongue that extends at an angle on the rear side, which tongue engages in a support in the carrier component and is slidably guided therein.

Optionally, the tongue may continuously extend over the entire length of the contact plate or only in sections.

As a support in the carrier component, one slit or several slits may be provided, into which the tongue protrudes. Preferably, the tongue extends in the deflection direction, i.e. essentially vertically relative to the underside of the battery.

Also a stop for the contact plate may be realised via the tongue, namely above all in the vertically upward direction, i.e. in the direction towards the underside of the battery and/or downwards. Here, a positive stop between the tongue and the carrier component must be implemented in the corresponding direction. An example of such a stop would be a lateral protrusion on the tongue, for example by bending the tongue edge over, said protrusion engaging in an undercut in the carrier component.

By means of the tongue, the contact plate may also be fixed to the carrier component, so that these two parts form a prefabricated, self-contained unit that cannot fall apart particularly in transit. It would be possible to implement the locking of the contact plate on the carrier component exclusively by means of the tongue.

According to the preferred embodiment, the carrier component is a ribbed hollow body. By means of this ribbing design, on the one hand a high level of stability and on the other hand a low weight are achieved.

Optionally, a preferably U-shaped bracket for the coolant pipe may be formed in the carrier component. It would for example additionally be possible here to implement a kind of snap-on connection between the coolant pipe and the carrier component, so that these two parts are positively connected to each other.

The carrier component may also have a frame or a frame section, which itself forms the bracket for the coolant pipe and the contact plate.

Moreover, the carrier component should also be implemented with one or several cavities that have a heat insulating effect for the battery.

The cavity or cavities may also be filled with a heat insulation component or a type of filler or foam, in order to enhance the insulating effect. In this context it would also be conceivable for the heat insulating component to be integrally moulded with the frame, in particular by foam adhesion of the heat insulating component to the carrier component.

The heat insulating component could of course also be implemented as a separate component that is inserted into the carrier component.

The carrier component should in particular have vertical ribs so that, on the one hand, the heat insulating components could be simply inserted and, on the other hand, in order to achieve a sufficient degree of stability and an even pressing force.

As has already been explained, instead of or in addition to the elastic contact plate, the carrier component may also be formed to be elastically deformable. It would be conceivable here for the carrier component to be implemented with transverse bending segments extending from the ribs. These bending segments are elastically bent in the installed condition and should preferably, but this does not necessarily have to be the case, form the top surface of the carrier component and be spaced from the underside thereof. The spacing ensures that the carrier component can deflect in the area of the bending segments towards the rear side.

The bending segments do not need to extend transversely, i.e. horizontally, but they may rise at an angle relative to the underside of the battery.

A further idea consists in providing bending segments which have elastic struts which extend obliquely at least in sections.

In this context it is possible for the struts to extend from a support point on the underside of the carrier component, i.e. at a distance from the contact plate, to a bracket of the coolant pipe. This means that the coolant pipe itself is located closer to the underside of the battery than the support point of the struts. Thus, when the cooling base is pressed against the battery, the force is applied to the contact plate in the area of the bracket of the coolant pipe.

Expressed in more general terms, the carrier component should have a pressing protrusion projecting on the top surface, via which a pressing force onto the contact plate is exerted. It is of advantage here if the underside of the pressing extension is spaced from the underside of the carrier component, in order to be able to elastically deflect in this direction. This is of particular importance when, for example, a pressing plate is attached to the underside of the carrier component, via which a pressing force as even as possible is to be exerted on the cooling base.

According to the preferred embodiment, the carrier component has fastening means which enable a direct fastening of the carrier component to the battery. In particular, a screw connection may be provided here, via which the pressing force may be easily adjustable. The fastening means may in this connection be protruding tongues or lugs which have through-openings or threads in order to enable the cooling apparatus to be fastened to the battery.

As has already been explained before, the carrier component is in particular manufactured from a plastic material, for example by means of an injection moulding process or by extrusion.

The cooling base does not need to have just one contact plate. At least one pair of contact plates may be provided, with the first contact plate being connected to the feed of the coolant pipe and the second contact plate being connected to the return of the coolant pipe. By means of this embodiment, a good thermal equilibrium from one battery cell to another may be realised, because the objective should be to keep all of the battery cells on a similar temperature level.

A further idea for cooling the battery cells as evenly as possible is to provide a coolant distributor from which a plurality of coolant pipes lead to their own contact plates and from there to a manifold. This means a type of parallel connection of coolant pipes is provided, each of which have their own contact plate associated therewith. Thus, the row or the rows of battery cells which are associated with a contact plate will be cooled just as well as their neighbouring row or groups of neighbouring rows that are associated with their neighbouring contact plate.

The coolant pipes preferably extend in a meandering manner or in a U-shape below the contact plates. As a feed distributor, also a dynamic pressure distributor or a Venturi distributor may be provided.

In order to avoid solder connections, feeds and returns may be connected to the coolant distributor or the manifold in a positive or non-positive manner, preferably by means of clamp ring connections.

As the coolant, particularly water, glycol, a water-glycol mix or a refrigerant, here in particular R134a, HFO1234yf or R744, may be used.

Since the battery units used are often very large, it may be advantageous to use a plurality of carrier components. By using a plurality of carrier components in the case of an ultra large battery, an even pressure may be exerted also in a surface-specific respect. Extremely large carrier components should have an enormous thickness in order to eliminate the possibility that only a localised pressing force is exerted against the underside. The use of a plurality of carrier components ensures that in the area of the smaller, individual carrier components a full-surface support and an even pressing force are provided in each case.

The carrier components may also be positively connected to each other in order to form a type of unit.

As has already been mentioned in the beginning, the invention also relates to a vehicle drive battery assembly having a vehicle drive battery with a plurality of battery cells and a cooling apparatus according to the invention. The cooling apparatus bears with its contact plate or with its contact plates against the underside of the battery.

The carrier components may be implemented in different sizes. One battery cell each may have allocated thereto a carrier component and/or a cooling base. This means conversely that no two carrier components or two cooling bases will extend over one battery cell.

It would in particular also be advantageous if a plurality of battery cells was combined to form a prefabricated unit in the form of a battery cell group. The battery on the whole may optionally also be formed from a plurality of battery cell groups. The cooling of each battery cell group should not be carried out by several carrier components or several cooling bases, but by only a single carrier component or a single cooling base.

In this context, a coolant feed and a coolant return should be provided below each battery cell group, so that all of the battery cells of one battery cell group are cooled essentially to the same temperature.

The cooling apparatus should in particular be positioned on that side of the battery that faces away from the electrical connections of the battery. If the top end wall is the wall on which the two poles of the battery are located, it should be the bottom end wall that is the cooled battery side.

There are several different approaches to achieve an even pressing force.

For example, the carrier plate may be fastened to a housing of the battery and may be pressed against the underside of the battery by the fastening. The contact plate here presses elastically against the underside of the battery, a base plate of the battery or directly against the battery cells.

Under certain circumstances, a base plate may be mechanically required especially when forming an assembly, so that the base plate is located between the batteries and the contact plate or plates. The base plate should of course be made from a material having a good thermal conductivity.

In this embodiment, the carrier component is in particular implemented as a rigid carrier component.

Another embodiment provides for a pressing plate to be provided below the cooling base, which pressing plate is preferably fixed to the battery and is pressed together and elastically deformed by a type of sandwich design of the cooling base between the battery and the pressing plate. Here, the pressing plate may (but this does not necessarily have to be the case) be implemented to be elastic, because the pressure may be transferred to the carrier component and the cooling base via the rigid pressing plate.

What is to be stressed here is that the above individual features may of course be combined in any desired manner.

In the figures:
- Figure 1 shows a battery cell group of a vehicle drive battery assembly according to the invention;
- Figure 2 shows a schematic sectional view of a vehicle drive battery assembly according to the invention, including a cooling apparatus according to a first embodiment of the invention;
- Figure 3 shows a detailed view of a contact plate of the cooling apparatus according to Fig. 2;
- Figure 4 shows a detailed view of a cooling base segment of the cooling apparatus according to Fig. 2;
- Figure 5 shows a detailed view of a heat insulating component of the cooling apparatus according to Fig. 2;
- Figure 6 shows a perspective view of a cooling base of the cooling apparatus according to Fig. 2;
- Figure 7 shows a top view of a cooling base of the cooling apparatus according to Fig. 2;
- Figure 8 shows a perspective view of a cooling apparatus according to the invention having eight cooling bases;
- Figure 9 shows an exploded view of the cooling apparatus according to Fig. 8;
- Figure 10 shows a detailed view of adjacent cooling bases of the cooling apparatus according to Fig. 8;
- Figure 11 shows a coolant pipe system of a cooling apparatus according to Fig. 8;
- Figure 12 shows a schematic sectional view of a cooling apparatus according to a second embodiment of the invention;
- Figure 13 shows a schematic sectional view of a cooling apparatus according to a third embodiment of the invention;
- Figure 14 shows a schematic sectional view of a cooling apparatus according to a fourth embodiment of the invention;
- Figure 15 shows a schematic sectional view of a cooling apparatus according to a fifth embodiment of the invention, including a carrier component having a high rigidity;
- Figure 16 shows a schematic sectional view of a cooling apparatus according to a sixth embodiment, including a flexible carrier component having a medium rigidity; and
- Figure 17 shows a schematic sectional view of a cooling apparatus according to a seventh embodiment, including a flexible carrier component having a low rigidity.

Vehicle drive batteries are used as energy storage devices for driving electric motors such as in electric or hybrid vehicles.

A vehicle drive battery is composed of a plurality of battery cells that are electrically coupled with each other. In order to ensure simple handling of the vehicle drive battery, a plurality of battery cells may be arranged to form a battery cell group, with a plurality of battery cell groups together forming the vehicle drive battery.

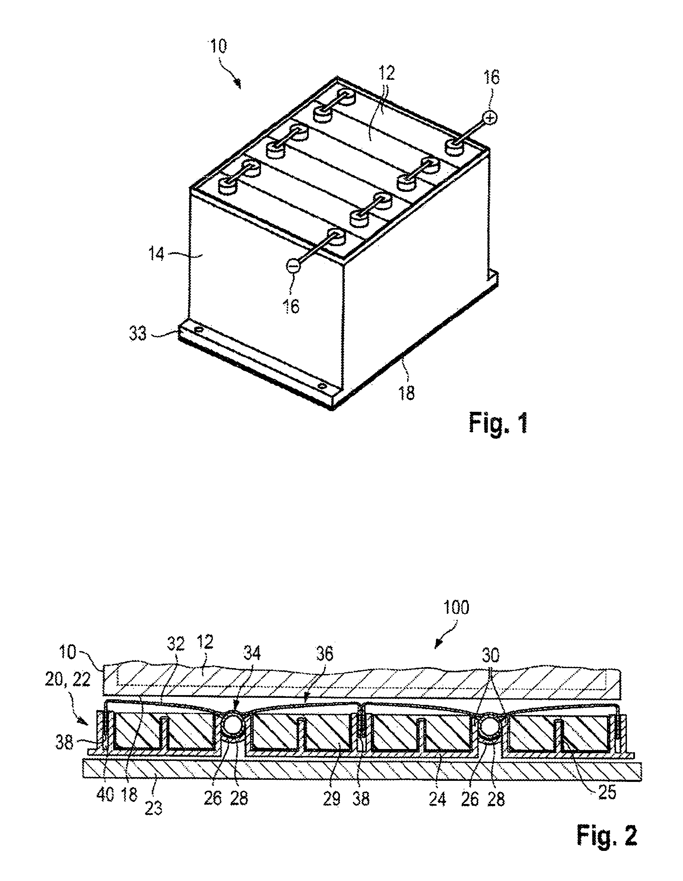

Fig. 1 shows a battery cell group 10 wherein six battery cells 12 are arranged in a common housing 14. The battery cells 12 are formed to be block-shaped and have a lateral surface as well as a top and a bottom end wall.

The battery cells 12 are further electrically connected to each other on the top surface of the battery cell group 10 and have a common electric connection 16.

The battery cell group 10 has a flat underside 18 which is formed to be heat conducting and via which all of the battery cells 12 of the battery cell group 10 may be cooled from the bottom end walls of the cells.

Alternatively, also other battery cell groups or individual battery cells may be provided, for example those wherein flat undersides of the battery cells 12, i.e. the bottom end walls thereof, are individually formed to be heat conducting for cooling the battery cells 12.

A cooling apparatus 20 for cooling the battery cell group 10 of the vehicle drive battery is shown in a schematic sectional view in Fig. 2. The cooling apparatus 20 and the vehicle drive battery together form a vehicle drive battery assembly 100.

The cooling apparatus 20 comprises a cooling base 22 that is disposed on the underside 18 of the battery cell group 10. The cooling base 22 may be fixed directly to the battery cell group 10 or may be fixed via an outer pressing plate 23 that may for example be part of an outer housing of the vehicle drive battery.

A carrier component 24 of the cooling base 22 is formed as a ribbed hollow body wherein reinforcement ribs 25 and U-shaped brackets 26 for a coolant pipe 28 are formed. The cavities formed by the carrier component 24 provide heat insulation between the battery cell group 10 and the pressing plate 23 of the outer housing of the vehicle drive battery.

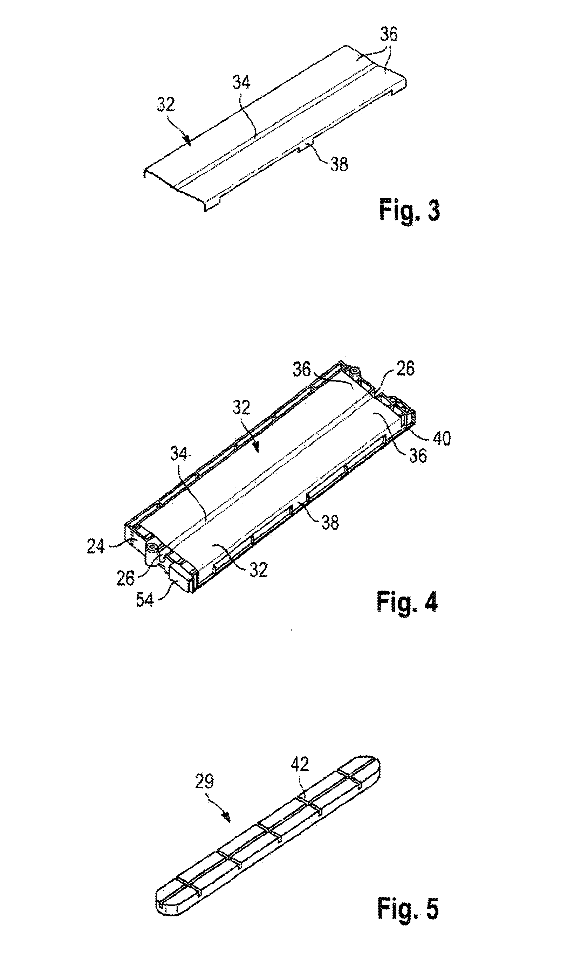

In the embodiment shown, one heat insulating component 29 is provided in each of the several cavities of the carrier component 24 (see Fig. 5).

The carrier component 24 forms essentially identical segments which are each associated with a coolant pipe section 28. Fig. 2 shows two segments of the carrier component 24.

The cooling base 22 will be described below by means of two adjacent segments of the carrier component 24, said description being analogously applicable to the further segments.

The carrier component 24 has a bracket section 26 which is provided for fixing the coolant pipe 28. The bracket section 26 hat snap-in noses 30 on both sides of the coolant pipe 28, which snap-in noses 30 enable a positive fastening of the coolant pipe 28 to the carrier component 24 (see Fig. 2).

A contact plate 32 rests on top of the coolant pipe 28. The support surface of the contact plate 32 on the coolant pipe 28 forms a first contact zone 34 for the transfer of heat between the contact plate 32 and the coolant pipe 28. The shape of the contact plate 32 is adapted to the outer perimeter of the coolant pipe 28, in order to maximise the area of the first contact zone 34.

Each segment of the carrier component 24 preferably has a contact plate 32.

A heat conducting paste may be provided between the coolant pipe 28 and the contact plate 32, which heat conducting paste enhances the transfer of heat between the two components.

The contact plate 32 extends from the first contact zone 34 from the centre on both sides outwards at an angle, so that a slight V-shape is achieved. The contact plate 32 extends here at an angle of between 0.5° to 10°, preferably 1° to 3° relative to the underside 18 of the battery cell group 10, here relative to horizontal.

Adjacent to the first contact zone 34, the contact plate 32 has two second contact zones 36 which are arranged on both sides of the first contact zone 34.

At the ends of the contact plate 32 which are remote from the coolant pipe 28, the contact plate 32 is bent in the direction of the carrier component 24 and forms two tongues 38 which are bent backwards at an angle.

The tongues 38 protrude into slots on the carrier component 24, which slots form supports 40 for the tongues 38, which supports act as a guide during the vertical movement of the contact plate 32.

The supports 40 are terminated on the underside by the carrier component 24, as a result of which the vertical movement of the tongue 38 in the support 40 downwards is limited.

The contact plate 32 is formed to be spring elastic. The cooling base 22 is attached to the battery cell group 10 in such a way that all of the contact plates 32 of the cooling base 22 are pre-biased in a spring elastic way against the underside 18 of the battery cell group 10. The contact plates 32 rest with the second contact zones 36 essentially flat and over their entire surface on the underside 18 of the battery cell group 10 with a contact area that is as large as possible.

The cooling base 22 may be fastened directly to the battery cell group 10, for example via screw connections, with an optimal pre-bias of the cooling base 22 against the underside 18 of the battery cell group 10 being achievable by tightening the screw connections to a predetermined torque. Lugs 33 on the housing 14 are used for fastening (see Fig. 1).

As a result of the pre-biasing of the cooling base 22, on the one hand the contact plate 32 is pressed with a second contact zone 36 against the underside 18 of the battery cell group 10 and on the other hand the first contact zone 34 is pressed against the coolant pipe 28. In this way, heat transfer is enhanced on both contact zones 34, 36.

Alternatively, the cooling base 22 may be disposed between the underside 18 of the battery cell group 10 and the pressing plate 23, with the battery cell group 10 being fixed to the pressing plate 23 and the pressing plate 23 pressing the cooling base 22 against the underside 18 of the battery cell group 10. The pressing plate 23 may be part of an outer housing of the vehicle drive battery.

Fig. 3 shows a perspective view of a detail of a contact plate 32. The contact plate 32 is made from a formed sheet.

The contact plate 32 is bent on each outer lateral edge, with three tongues 38 being provided on each side, said tongues extending essentially vertically downwards.

The contact plate 32 is made from a material having a high heat conductivity, for example from copper or aluminium, with aluminium being preferred because of its lower weight.

Fig. 4 shows the contact plate 32 inserted in a segment of the carrier component 24. The three tongues 38 on the visible side of the contact plate 32 are located in the supports 40 of the carrier component 24 which are provided for this purpose.

The number of the tongues 38 and supports 40 and the way they are spread over the contact plate 32 or the carrier component 24 are essentially optional, it is particularly possible to provide just a single tongue 38 that extends over the entire length of the contact plate 32.

The carrier component 24 of the cooling base 22 is made from a plastic material by way of injection moulding. The material of the carrier component 24 has a heat conductivity that is lower by a factor of more than 3 than the heat conductivity of the contact plates 32. Also other materials or methods of manufacture may be used.

Fig. 5 shows a heat insulating component 29 which is implemented as a separate component and which may be inserted into the carrier component 24. The thermal insulating component 29 includes a plurality of recesses 42 into which the reinforcement ribs 25 of the carrier component 24 extend in the inserted condition of the thermal insulating component 29.

The thermal insulating component 29 consists, for example, of a foamed plastic material. It is also possible for the thermal insulating component 29 to be, for example, foam moulded onto the carrier component 24.

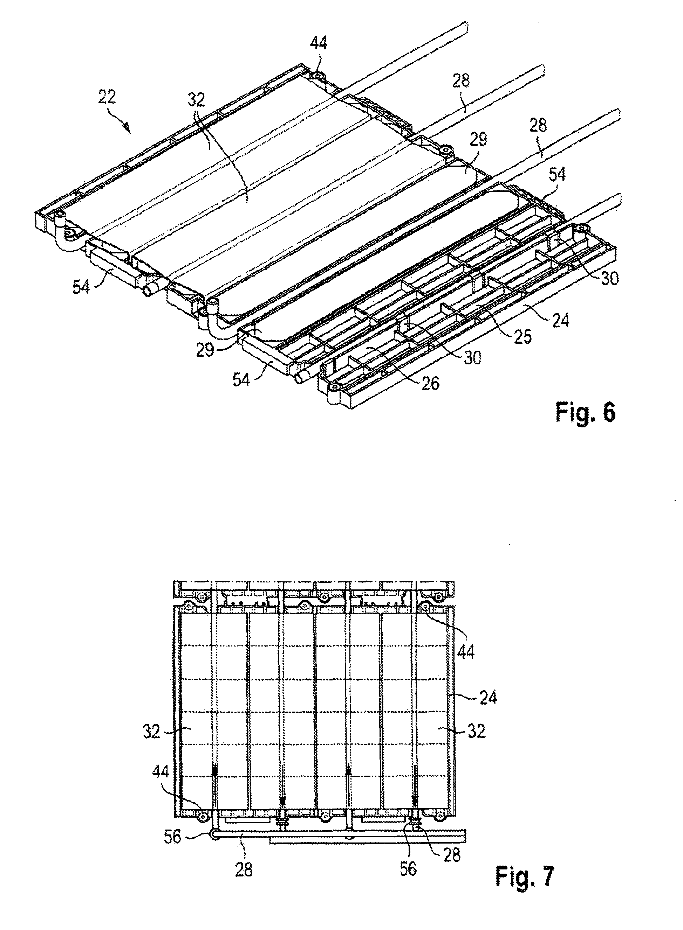

Fig. 6 shows a perspective view of a cooling base 22 having four segments of the carrier component 24, which segments merge from one into another. In the case of the first segment located on the right hand side, only the carrier component 24 having the inserted coolant pipe section 28 is shown.

The carrier component 24 forms a frame having bracket portions 26 for the coolant pipe sections 28, in which the coolant pipe sections 28 are fastened to the carrier component 24 respectively by four pairs of snap-in noses 30. On both sides of the retaining sections 26 in each case, the carrier component 24 is formed in the shape of a well, with several vertical reinforcement ribs 25 extending at the bottom of the carrier component 24 and cavities being formed by the carrier component 24.

In the adjacent second segment, heat insulating components 29 are inserted into the cavities of the carrier component 24 with the reinforcement ribs 25.

The two left-hand segments of the cooling base 22 show the contact plates 32 which bear with their first contact zones 34 against the coolant pipes 28.

Fig. 7 shows a top view of the cooling base 22 of the cooling apparatus 20 according to Fig. 6. The cooling base 22 comprises the carrier component 24 which has four segments, four coolant pipe sections 28 and four contact plates 32. As indicated by the arrows on the coolant pipes 28, respectively two adjacent coolant pipe sections 28 form a pair made up from a coolant feed and a coolant return.

The common underside 18 of the battery cell group 10 is in contact with all of the four contact plates 32. The positions of the individual battery cells 12 of the battery cell group 10 are schematically indicated by the dotted lines in Fig. 7. The battery cell group 10 is allocated to a self-supporting cooling base 22 and vice versa.

It is also possible for a battery cell group 10 to be provided, wherein each of the battery cells 12 bears individually with its underside against the contact plates 32 of the cooling base 22. It is provided for each of the battery elements to be cooled, which means either a battery cell group 10 or an individual battery cell 12, is in each case in thermal contact with at least one feed/return pair of at least one coolant pipe 28, as a result of which it is ensured that all of the battery elements have the same temperature.

The cooling base 22 has several fastening means 44 (see Fig. 7) . The fastening means 44 are used for fastening the carrier component 24 to the battery cell group 10 or to a housing of the vehicle drive battery. In the embodiment shown, the fastening means 44 are injection-moulded threads for screw connections. However, also other types of fastening means 44 may be provided.

A vehicle drive battery may, as mentioned, also consist of a plurality of battery cell groups 10. Said plurality of battery cell groups 10 is accommodated in a vehicle drive battery assembly 100 in a common outer housing of the vehicle drive battery having a common cooling apparatus 20.

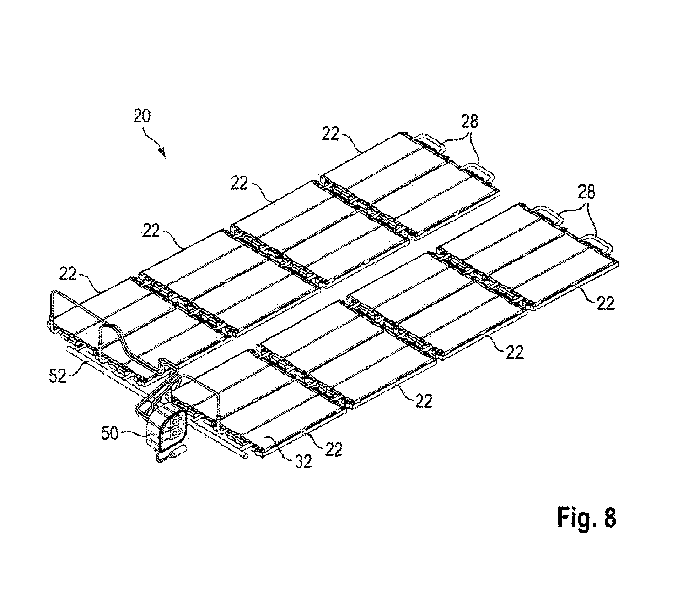

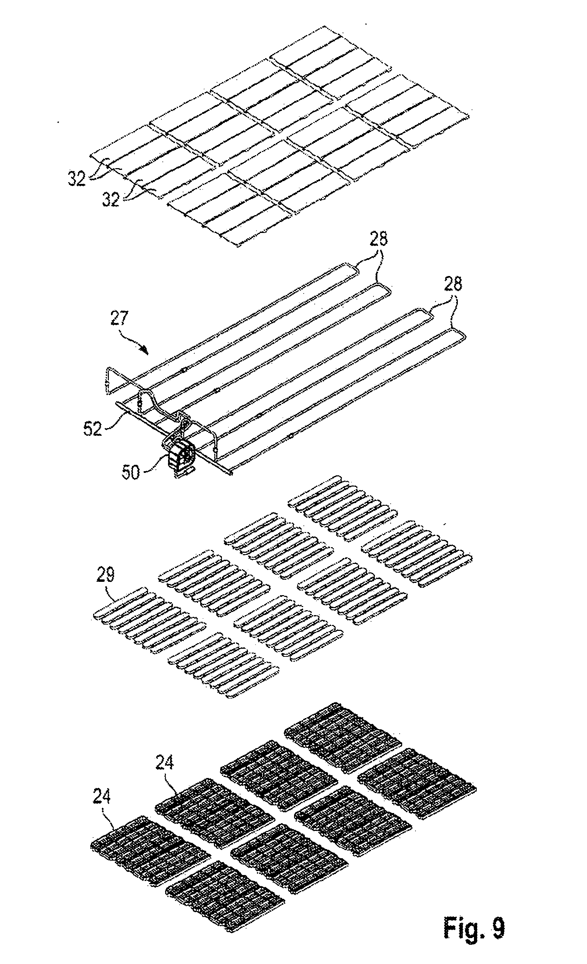

A cooling apparatus 20 having a plurality of identical cooling bases 22 is shown in Fig. 8. Eight cooling bases are provided, which are arranged in two rows of four cooling bases 22 each. Fig. 9 shows an exploded view of the cooling apparatus 20 from Fig. 8. The cooling bases 22 correspond to the cooling bases 22 shown in Figures 6 and 7.

A coolant pipe system 27 has a plurality of coolant pipes 28 each with a coolant feed that is connected to a common coolant distributor 50, and a coolant return that is connected to a common manifold 52. The coolant circuit is closed by a refrigerating machine (not shown).

In the embodiment shown, four coolant pipes 28 extending in a U shape are provided, which are each formed in a hairpin shape, having a coolant feed and a coolant return which run parallel to each other. Two coolant pipes 28 each having a feed section and a return section are each associated with a cooling base 22.

The top surface of the cooling bases 22 is formed by the contact plates 32, below which the coolant pipes 28 and the heat insulating components 29 are arranged. Four contact plates 32 and eight heat insulating components 29 are each supported by four carrier components 24 of a cooling base 22 (see Fig. 9).

The area of the cooling bases 22 is matched to the area of the common underside 18 of the battery cell group 10, so that exactly one battery cell group 10 is associated with exactly one cooling base 22. In the embodiment shown in Fig. 8, eight battery cell groups 10, which are arranged on the eight cooling bases 22 of cooling apparatus 20, thus form the vehicle drive battery assembly 100.

The common underside 18 of the battery cell group 10 is here in heat conducting contact with the second contact zone 36 of the contact plates 32 of the cooling bases 22.

The spring-elastically formed contact plates 32 bear extensively and in a pre-biased manner against the underside 18 of the battery cell group 10. In this way, any tolerances and unevenness on the underside 18 of the battery cell group 10 and/or the cooling bases 22 are compensated and a good transfer of heat between the cooling apparatus 20 and the battery cell group 10 is ensured.

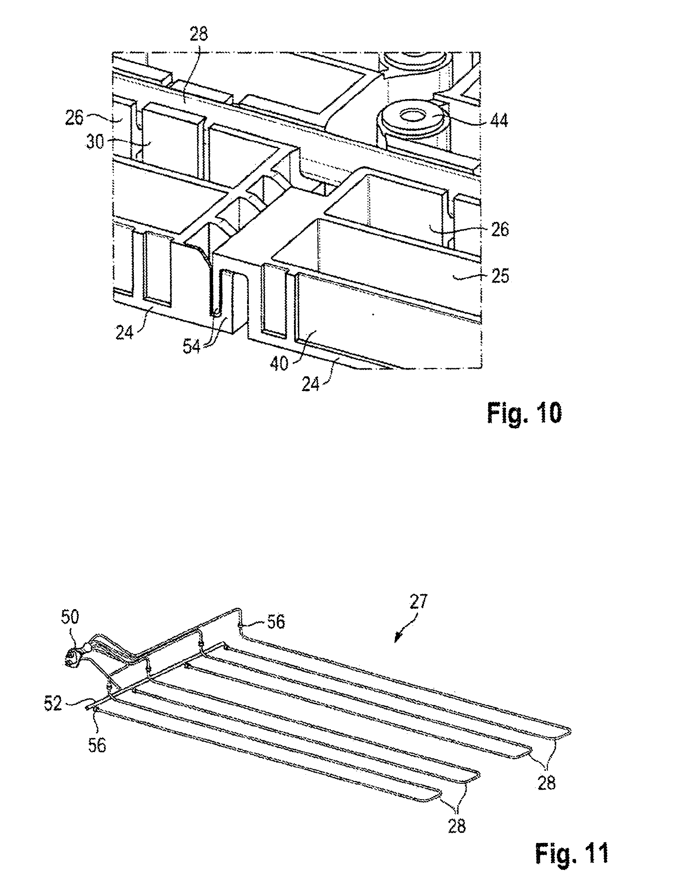

Fig. 10 shows a detailed view of two adjacent carrier components 24 having a common coolant pipe 28. Cooling bases 22 that are arranged next to each other are positively connected to each other, as a result of which any relative displacement of the cooling bases 22 relative to each other is prevented. The positive connection of the cooling bases 22 is achieved by means of hook-shaped connecting parts 54 which are attached to adjacent sides of two cooling bases 22 and which engage with each other. It is also possible for the two rows of carrier components 24, which are shown in Fig. 9, to be laterally connected to each other.

In the background of Fig. 10, fastening means 44 for fastening the cooling base 22 to the battery can be seen.

Fig. 11 shows the coolant pipe system 27 of the cooling apparatus 20 from Figures 8 and 9 having the four coolant pipes 28, the coolant distributor 50 and the manifold 52. The coolant distributor 50 is for example a back pressure distributor or a Venturi distributor.

The feeds and returns of the coolant pipe 28 are each positively and non-positively attached to the coolant distributor 50 and to the manifold 52 by means of press ring connections 56. In the case of the press ring connections 56, the pipes to be connected are inserted into each other and are positively and/or non-positively held together by a compression ring. In this way, soldering of the pipe connections is no longer necessary.

The coolant, which is passed through the coolant pipes 28, may be a coolant liquid, particularly water, glycol or a water-glycol mix, or a refrigerant, in particular R134a, HFO1234yf or R744.

As the coolant in the coolant pipes 28 flows through the cooling bases 22, it receives heat from the battery cell groups 10 to be cooled, as a result of which the coolant allows a lower cooling output in the rear sections of the coolant pipes 28 compared to the front sections of the coolant pipes 28. Since each cooling base 22 is in communication both with the feed and the return of at least one coolant pipe 28, the cooling output is averaged, as a result of which an even cooling level of all of the battery cells is ensured along a coolant pipe 28.

In the embodiment shown, each cooling base row has two coolant pipes 28 each including a pair made up from a feed section and a return section. As a result of this parallel coolant pipe system 27, the individual coolant pipes 28 are shorter and a higher flow rate of coolant is achieved, as a result of which the response time of the cooling apparatus 20 to temperature fluctuations is reduced.

Two further embodiments of the cooling apparatus 20 will be described below, whilst essentially only the differences compared to the embodiment so far described will be addressed.

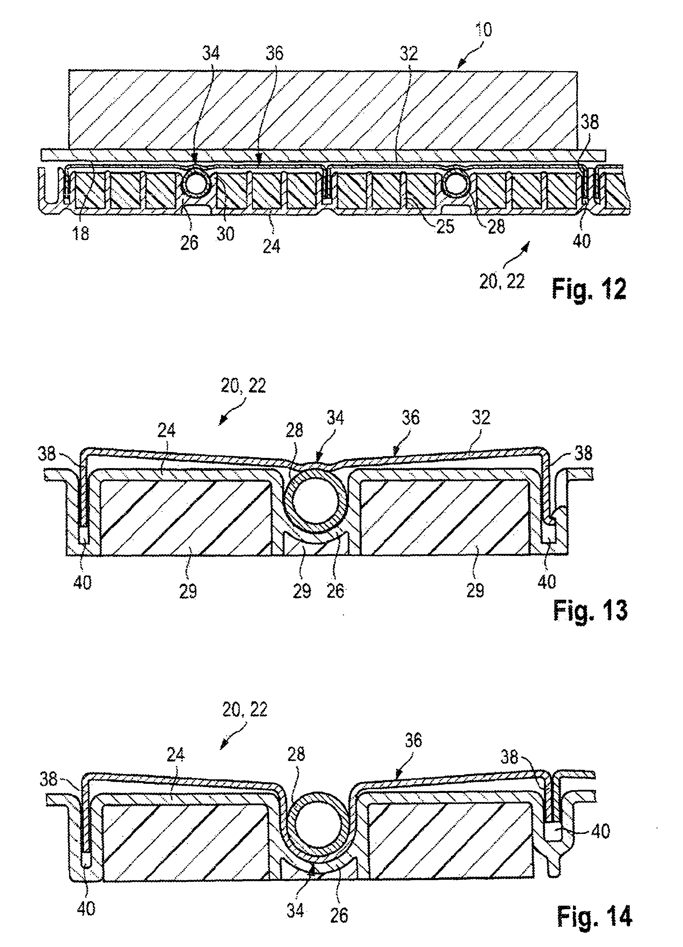

Fig. 12 shows a further embodiment of the cooling apparatus 20, in which only the embodiment of the carrier component 24 was slightly changed compared to the first embodiment. As a result of the larger number of reinforcement ribs 25 of the carrier component 24, the cooling base 22 has a higher rigidity.

A high rigidity of the carrier component 24 is particularly advantageous if the cooling apparatus 20 is fastened directly to the battery cell groups 10 without an underlying pressing plate 23.

In the first and second embodiments, the cavities formed by the frame of the carrier component 24 are essentially arranged on the side of the contact plate 32, whereas the frame of the carrier component 24 is essentially arranged so as to face away from the contact plate 32. The heat insulating components 29 are arranged between the carrier component 24 and the contact plate 32, as a result of which the heat insulating components 29 are retained by the carrier component 24 and the contact plate 32.

Fig. 13 shows a third embodiment of the cooling apparatus 20, wherein the frame of the carrier component 24 is arranged essentially on the side of the contact plate 32 and the cavity for heat insulation, which is formed by the frame, is arranged essentially facing away from the contact plate 32. This allows the contact plate 32 to be mounted from the top of the carrier component 24 and the heat insulating components 29 to be inserted from the opposite underside of the carrier component 24.

On the right hand side of Fig. 13, a support 40 is formed as a guide for a tongue 38 of the contact plate 32, said support 40 and tongue 38 each having protrusions that are aligned with each other. As a result, the movement of the tongue 38 of the contact plate 32 is limited vertically downwards, whereas the movement of the tongue 38 of the contact plate 32 is limited vertically downwards by the bottom of the support 40. This type of retention of the tongues 38 of the contact plate 32 is provided at several points on the contact plate 32, so that the contact plate 32 is fastened to the carrier component 24 solely via the tongues 38. Thus, the contact plates 32 cannot become unfastened from the carrier component 24, which is advantageous in particular where the cooling apparatus 20 is not fastened to a vehicle drive battery, for example during transport.

Fig. 14 shows a fourth embodiment, wherein the contact plate 32 is clamped between the carrier component 24 and the coolant pipe 28. The contact plate 32 thus bears with the first contact zone 34 against the side of the coolant pipe 28 that faces the carrier component 24. A layer of a heat conducting paste may be provided between the contact plate 32 and the coolant pipe 28, in order to enhance the heat conductivity between the coolant pipe 28 and the contact plate 32 within the first contact zone 34. The contact plate 32 is in this way fastened to the carrier component 24 by means of the coolant pipe 28.

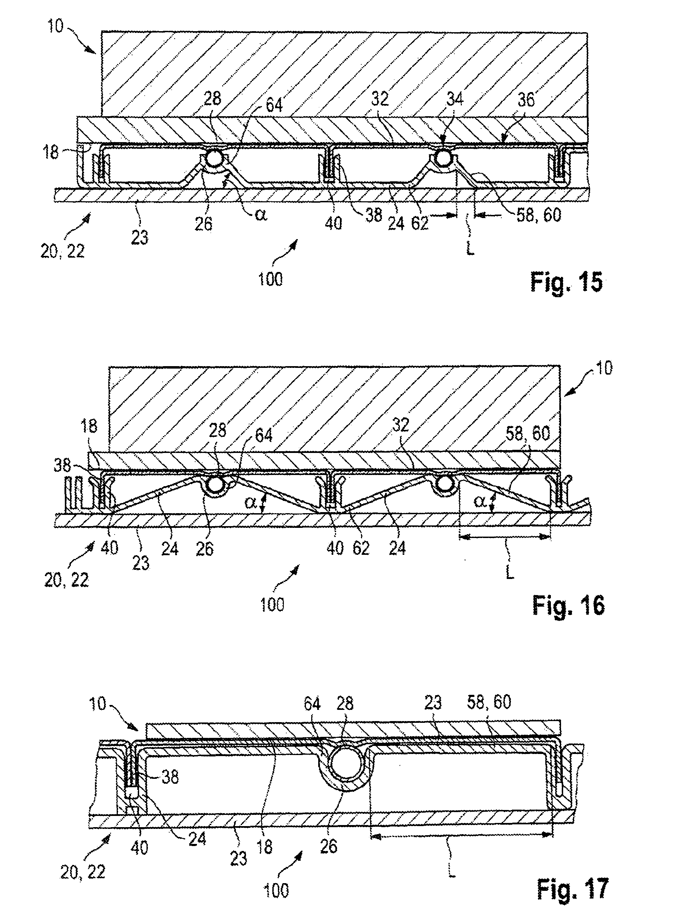

Figures 15, 16 and 17 show three embodiments of the cooling apparatus 20 where the carrier component 24 is formed to be elastic.

The vehicle drive battery assembly 100 has an outer battery housing which forms a pressing plate 23. The cooling bases 22 of the cooling apparatus 20 are arranged between the common underside 18 of the battery cell group 10 and the pressing plate 23 of the outer housing of the battery in an elastically pre-biased way.

As a result of the elastically formed carrier component 24 of the cooling bases 22, manufacturing tolerances may be compensated also in the area of the pressing plate 23.

The underside of the pressing extension 64 protruding from the top of the carrier component 24 is spaced at a distance from the underside 18 of the carrier component 24, in order to deflect elastically in this direction. Via the pressing extension 64 of the carrier component 24, a pressing force onto the contact plate 32 and/or the coolant pipe 28 is exerted. By means of this pressing force, the heat transfer via the first contact zone 34 and/or the second contact zone 36 of the carrier component is enhanced.

Depending on the embodiment, a relatively high elasticity or a relatively high rigidity of the carrier component 24 and thus of the cooling base 22 may be realised. Fig. 15 shows an embodiment having a high bending rigidity of the carrier component 24. The carrier component 24 has elastically deformable transverse bending segments 58 which extend from the ribs, which bending segments 58 are elastically bent in the installed condition.

In particular in the edge area of the cooling bases 22, reinforcement ribs are provided which are not formed to be elastic and which limit a deformation of the cooling base 22.

In Fig. 15, the bending segment 58 has an obliquely extending elastic strut 60 which extends from a support point 62 on the underside of the carrier component to a bracket of the coolant pipe 28. The support point 62 is spaced apart from the coolant pipe by a section L in the plane of the coolant apparatus and the strut 60 extends at an angle α relative to the plane of the cooling apparatus. If the section L is selected to be larger or the angle α is selected to be smaller, the elasticity of the strut 60 will be increased.

The sixth embodiment shown in Fig. 16 essentially corresponds to the fifth embodiment shown in Fig. 15, with the section L essentially corresponding to the width of the second contact zone 36 of the contact plate 32, as a result of which a medium rigidity of the cooling base 22 is realised.

In the seventh embodiment shown in Fig. 17, the bending segment 58 forms the top of the carrier component 24 and is spaced from the underside thereof so as to be able to deflect correspondingly downwards. The section L thus corresponds to the entire width of the second contact zone 36 of the contact plate 32 and the angle α approximates zero in the mounted condition. In the non-mounted condition, the pressing extension 26 extends slightly upwards. Here, the cooling base has a low rigidity.

It is explicitly pointed out that it is possible to combine the features of the various embodiments shown with each other in various ways.

## Claims

1. A cooling apparatus (20) for a vehicle drive battery, comprising a plurality of battery cells (12) arranged next to each other, said battery cells having a lateral surface, a top end wall and a bottom end wall, said vehicle drive battery having an essentially flat underside (18), comprising:
at least one cooling base (22) extensively bearing against the underside (18) of the battery, at least one coolant pipe (28), at least one heat conducting contact plate (32) for contacting the underside (18) and at least one carrier component (24) having a heat conductivity that is lower than that of the contact plate (32) and that forms a bracket (26) for the coolant pipe (28) and the contact plate (32),
said cooling base (22) being formed to be spring elastic relative to the underside (18) and said contact plate (32) bearing extensively and in a pre-biased manner against the underside (18).

2. The cooling apparatus (20) as claimed in claim 1, **characterised in that** the contact plate (32) is a moulded sheet, preferably an aluminium or copper sheet and/or has at least one first contact zone (34) for heat transfer in contact with the coolant pipe (28) as well as at least one second contact zone (36) for heat transfer in contact with the vehicle drive battery, said contact plate (32) encompassing the coolant pipe (28) in the area of the first contact zone (34) in sections.

3. The cooling apparatus (20) as claimed in any one of the preceding claims, **characterised in that** a heat conducting paste is provided between the contact plate (32) and the coolant pipe (28).

4. The cooling apparatus (20) as claimed in any one of the preceding claims, **characterised in that** the contact plate (32) is formed to be elastically deformable.

5. The cooling apparatus (20) as claimed in claim 4, **characterised in that** the contact plate (32) extends in the area of its contact zone (36) at an angle of from 0.5° to 10°, preferably 1° to 3° relative to the underside (18).

6. The cooling apparatus (20) as claimed in claim 5, **characterised in that** the coolant pipe (28) extends at the centre of the contact plate (32) and the contact plate (32) extends from the centre on both sides at an angle in the direction of the underside (18).

7. The cooling apparatus (20) as claimed in any one of the preceding claims, **characterised in that** the contact plate (32) bears with its front or rear side against the coolant pipe (28), preferably in an elastically pre-biased manner.

8. The cooling apparatus (20) as claimed in any one of the preceding claims, **characterised in that** the contact plate (32) has at least one tongue (38) that is angled at the rear side thereof, said tongue being slidably guided in a support in the carrier component (24).

9. The cooling apparatus (20) as claimed in any one of the preceding claims, **characterised in that** the carrier component (24) is formed as a ribbed hollow body, in which preferably U-shaped brackets (26) for the coolant pipe (28) are formed.

10. The cooling apparatus (20) as claimed in claim 9, **characterised in that** the carrier component (24) has vertical ribs (25).

11. The cooling apparatus (20) as claimed in any one of the preceding claims, **characterised in that** the carrier component (24) is formed to be elastically deformable and has transverse bending segments (58) extending from the ribs, which in the installed condition are elastically bent, said bending segments (58) preferably forming the top of the carrier component (24) and being spaced apart from the underside thereof.

12. The cooling apparatus (20) as claimed in claim 11, **characterised in that** the bending segments (58) have elastic struts (60) which extend obliquely at least in sections, particularly **in that** the struts (60) extend from a support point (62) on the underside of the carrier component (24) to a bracket (26) of the coolant pipe (28).

13. The cooling apparatus (20) as claimed in any one of the preceding claims, **characterised in that** the carrier component (24) has a pressing extension (64) protruding at the top, via which pressing extension a pressing force is exerted on the contact plate (32), particularly **in that** the underside of the pressing extension (64) is spaced from the underside of the carrier component (24) so as to deflect elastically in this direction.

14. The cooling apparatus (20) as claimed in any one of the preceding claims, **characterised in that** the carrier component (24) is made from a plastic material, preferably by injection moulding or by extrusion.

15. The cooling apparatus (20) as claimed in any one of the preceding claims, **characterised in that** the cooling base (22) has at least one pair of contact plates (32), said first contact plate (32) being connected to the feed of the coolant pipe (28) and said second contact plate (32) being connected to the return of the coolant pipe (28).

16. The cooling apparatus (20) as claimed in any one of the preceding claims, **characterised in that** a coolant distributor (50) is provided, from which several coolant pipes (28) lead to their own contact plates (32) and from there to a manifold (52).

17. The cooling apparatus (20) as claimed in any one of the preceding claims, **characterised in that** several carrier components (24) are provided which are particularly positively connected to each other.

18. A vehicle drive battery assembly (100) including a vehicle drive battery comprising a plurality of battery cells (12), and a cooling apparatus (20) as claimed in any one of the preceding claims, said cooling apparatus (20) bearing with the at least one contact plate (32) against the underside (18) of the battery.

19. The vehicle drive battery assembly (100) as claimed in claim 18, **characterised in that** only one carrier component (24) extends immediately on the underside of in each case a single battery cell (12) or a battery cell group (10), wherein a battery cell group (10) is a prefabricated unit made up from a plurality of battery cells (12).

20. The vehicle drive battery assembly (100) as claimed in claim 19, **characterised in that** a coolant feed and a coolant return extend below each battery cell group (10).

21. The vehicle drive battery assembly (100) as claimed in any one of claims 18 to 20, **characterised in that** the coolant apparatus (20) is mounted on a side of the battery that faces away from the electric terminals (16) of the battery.

22. The vehicle drive battery assembly (100) as claimed in any one of claims 18 to 21, **characterised in that** the carrier component (24) is fixed to a housing of the battery and is pressed by fastening means against the underside (18) of the battery, with the contact plate pressing elastically against the underside (18) of the battery, a base plate of the battery or the battery cells (12).

23. The vehicle drive battery assembly (100) as claimed in any one of claims 18 to 22, **characterised in that** a pressing plate (23) is provided below the cooling base (22), said pressing plate (23) preferably being fixed to the battery and being used to elastically deform the cooling base (22) between the battery and the pressing plate (23).

## Patentansprüche

1. Kühlvorrichtung (20) für eine Fahrzeugantriebsbatterie, die mehrere nebeneinander angeordnete Batteriezellen (12) umfasst, wobei die Batteriezellen eine seitliche Oberfläche, eine obere Endwand und eine untere Endwand haben, wobei die Fahrzeugantriebsbatterie eine im Wesentlichen flache Unterseite (18) hat, umfassend:
mindestens eine Kühlbasis (22), die großflächig gegen die Unterseite (18) der Batterie anliegt, mindestens ein Kühlmittelrohr (28), mindestens eine wärmeleitende Kontaktplatte (32) für einen Kontakt mit der Unterseite (18) sowie mindestens ein Trägerbauteil (24) mit einer Wärmeleitfähigkeit, die geringer als diejenige der Kontaktplatte (32) ist, und die eine Klammer (26) für das Kühlmittelrohr (28) und die Kontaktplatte (32) bildet,
wobei die Kühlbasis (22) so geformt ist, dass sie im Verhältnis zur Unterseite (18) federelastisch ist und die Kontaktplatte (32) großflächig und in einer vorgespannten Weise gegen die Unterseite (18) anliegt.

2. Kühlvorrichtung (20) nach Anspruch 1, **dadurch gekennzeichnet, dass** die Kontaktplatte (32) ein geformtes Blech ist, vorzugsweise ein Aluminium- oder Kupferblech, und/oder mindestens eine erste Kontaktzone (34) für eine Wärmeübertragung in Kontakt mit dem Kühlmittelrohr (28) sowie mindestens eine zweite Kontaktzone (36) für eine Wärmeübertragung in Kontakt mit der Fahrzeugantriebsbatterie hat, wobei die Kontaktplatte (32) das Kühlmittelrohr (28) im Bereich der ersten Kontaktzone (34) in Abschnitten umgibt.

3. Kühlvorrichtung (20) nach einem der vorstehend aufgeführten Ansprüche, **dadurch gekennzeichnet, dass** eine wärmeleitende Paste zwischen der Kontaktplatte (32) und dem Kühlmittelrohr (28) vorgesehen ist.

4. Kühlvorrichtung (20) nach einem der vorstehend aufgeführten Ansprüche, **dadurch gekennzeichnet, dass** die Kontaktplatte (32) so geformt ist, dass sie elastisch verformbar ist.

5. Kühlvorrichtung (20) nach Anspruch 4, **dadurch gekennzeichnet, dass** sich die Kontaktplatte (32) im Bereich ihrer Kontaktzone (36) in einem Winkel von 0,5° bis 10°, vorzugsweise 1° bis 3°, im Verhältnis zur Unterseite (18) erstreckt.

6. Kühlvorrichtung (20) nach Anspruch 5, **dadurch gekennzeichnet, dass** sich das Kühlmittelrohr (28) im Zentrum der Kontaktplatte (32) und die Kontaktplatte (32) vom Zentrum auf beiden Seiten in einem Winkel in der Richtung der Unterseite (18) erstreckt.

7. Kühlvorrichtung (20) nach einem der vorstehend aufgeführten Ansprüche, **dadurch gekennzeichnet, dass** die Kontaktplatte (32) mit ihrer Vorder- oder Rückseite gegen das Kühlmittelrohr (28) anliegt, vorzugsweise in einer elastisch vorgespannten Weise.

8. Kühlvorrichtung (20) nach einem der vorstehend aufgeführten Ansprüche, **dadurch gekennzeichnet, dass** die Kontaktplatte (32) mindestens eine Zunge (38) hat, die an der Rückseite davon winklig ausgebildet ist, wobei die Zunge in einer Stütze im Trägerbauteil (24) gleitend geführt ist.

9. Kühlvorrichtung (20) nach einem der vorstehend aufgeführten Ansprüche, **dadurch gekennzeichnet, dass** das Trägerbauteil (24) als ein gerippter Hohlkörper geformt ist, in dem vorzugsweise U-förmige Klammern (26) für das Kühlmittelrohr (28) ausgebildet sind.

10. Kühlvorrichtung (20) nach Anspruch 9, **dadurch gekennzeichnet, dass** das Trägerbauteil (24) vertikale Rippen (25) hat.

11. Kühlvorrichtung (20) nach einem der vorstehend aufgeführten Ansprüche, **dadurch gekennzeichnet, dass** das Trägerbauteil (24) so geformt ist, dass es elastisch verformbar ist und querlaufende Biegesegmente (58), die sich von den Rippen aus erstrecken, hat, die in eingebautem Zustand elastisch gebogen sind, und wobei die Biegesegmente (58) vorzugsweise das Oberteil des Trägerbauteils (24) bilden und von der Unterseite davon beabstandet sind.

12. Kühlvorrichtung (20) nach Anspruch 11, **dadurch gekennzeichnet, dass** die Biegesegmente (58) elastische Verstrebungen (60) haben, die sich mindestens in Abschnitten schrägverlaufend erstrecken, und dass sich die Verstrebungen (60) insbesondere von einem Abstützpunkt (62) an der Unterseite des Trägerbauteils (24) zu einer Klammer (26) des Kühlmittelrohrs (28) erstrecken.

13. Kühlvorrichtung (20) nach einem der vorstehend aufgeführten Ansprüche, **dadurch gekennzeichnet, dass** das Trägerbauteil (24) eine Pressverlängerung (64) hat, die am Oberteil vorspringt, wobei über diese Pressverlängerung eine Presskraft auf die Kontaktplatte (32) ausgeübt wird, insbesondere dadurch, dass die Unterseite der Pressverlängerung (64) von der Unterseite des Trägerbauteils (24) beabstandet ist, um sich in dieser Richtung elastisch abbiegen zu können.

14. Kühlvorrichtung (20) nach einem der vorstehend aufgeführten Ansprüche, **dadurch gekennzeichnet, dass** das Trägerbauteil (24) aus einem Kunststoffmaterial hergestellt ist, vorzugsweise durch Spritzgießen oder Extrudieren.

15. Kühlvorrichtung (20) nach einem der vorstehend aufgeführten Ansprüche, **dadurch gekennzeichnet, dass** die Kühlbasis (22) mindestens ein Paar Kontaktplatten (32) hat, wobei die erste Kontaktplatte (32) mit der Zuleitung des Kühlmittelrohrs (28) und die zweite Kontaktplatte (32) mit dem Rücklauf des Kühlmittelrohrs (28) verbunden sind.

16. Kühlvorrichtung (20) nach einem der vorstehend aufgeführten Ansprüche, **dadurch gekennzeichnet, dass** ein Kühlmittelverteiler (50) vorgesehen ist, von dem aus mehrere Kühlmittelrohre (28) zu ihren eigenen Kontaktplatten (32) und von dort aus zu einem Sammler (52) führen.

17. Kühlvorrichtung (20) nach einem der vorstehend aufgeführten Ansprüche, **dadurch gekennzeichnet, dass** mehrere Trägerbauteile (24) vorgesehen sind, die insbesondere betriebswirksam miteinander verbunden sind.

18. Fahrzeugantriebsbatteriebaugruppe (100) mit einer Fahrzeugantriebsbatterie, die mehrere Batteriezellen (12) sowie eine Kühlvorrichtung (20) nach einem der vorstehend aufgeführten Ansprüche umfasst, wobei die Kühlvorrichtung (20) mit der mindestens einen Kontaktplatte (32) gegen die Unterseite (18) der Batterie anliegt.

19. Fahrzeugantriebsbatteriebaugruppe (100) nach Anspruch 18, **dadurch gekennzeichnet, dass** sich nur ein Trägerbauteil (24) unmittelbar an der Unterseite von jeweils einer einzelnen Batteriezelle (12) oder einer Batteriezellengruppe (10) erstreckt, wobei eine Batteriezellengruppe (10) eine aus mehreren Batteriezellen (12) bestehende vorgefertigte Einheit ist.

20. Fahrzeugantriebsbatteriebaugruppe (100) nach Anspruch 19, **dadurch gekennzeichnet, dass** sich eine Kühlmittelzuleitung und ein Kühlmittelrücklauf unterhalb einer jeden Batteriezellengruppe (10) erstrecken.

21. Fahrzeugantriebsbatteriebaugruppe (100) nach einem der Ansprüche 18 bis 20, **dadurch gekennzeichnet, dass** die Kühlvorrichtung (20) an einer Seite der Batterie montiert ist, die von den Elektroanschlüssen (16) der Batterie abgewandt ist.

22. Fahrzeugantriebsbatteriebaugruppe (100) nach einem der Ansprüche 18 bis 21, **dadurch gekennzeichnet, dass** das Trägerbauteil (24) an einem Gehäuse der Batterie fixiert ist und durch Befestigungsmittel gegen die Unterseite (18) der Batterie gedrückt wird, wobei sich die Kontaktplatte elastisch gegen die Unterseite (18) der Batterie, eine Basisplatte der Batterie oder die Batteriezellen (12) drückt.

23. Fahrzeugantriebsbatteriebaugruppe (100) nach einem der Ansprüche 18 bis 22, **dadurch gekennzeichnet, dass** eine Pressplatte (23) unterhalb der Kühlbasis (22) vorgesehen ist, wobei die Pressplatte (23) vorzugsweise an der Batterie fixiert und dafür verwendet wird, um die Kühlbasis (22) zwischen der Batterie und der Pressplatte (23) elastisch zu verformen.

## Revendications

1. Appareil de refroidissement (20) pour une batterie d'entraînement de véhicule comprenant une pluralité de cellules de batterie (12) agencées les unes à côté des autres, lesdites cellules de batterie ayant une surface latérale, une paroi d'extrémité supérieure et une paroi d'extrémité inférieure, ladite batterie d'entraînement de véhicule ayant un côté inférieur essentiellement plat (18), l'appareil comprenant :
au moins une base de refroidissement (22) pressant de manière extensive contre le côté inférieur (18) de la batterie, au moins un conduit de réfrigérant (28), au moins une plaque de contact thermoconductrice (32) pour venir en contact avec le côté inférieur (18) et au moins un composant porteur (24) ayant une conductivité thermique inférieure à celle de la plaque de contact (32) et
formant une console (26) pour le conduit de réfrigérant (28) et la plaque de contact (32),
ladite base de refroidissement (22) étant formée de manière à avoir une élasticité de ressort par rapport au côté inférieur (18) et ladite plaque de contact (32) pressant de manière extensive et de manière précontrainte contre le côté inférieur (18).

2. Appareil de refroidissement (20) selon la revendication 1, **caractérisé en ce que** la plaque de contact (32) est une feuille moulée, de préférence une feuille d'aluminium ou de cuivre et/ou présente au moins une première zone de contact (34) pour le transfert thermique en contact avec le conduit de réfrigérant (28) ainsi qu'au moins une deuxième zone de contact (36) pour le transfert thermique en contact avec la batterie d'entraînement du véhicule, ladite plaque de contact (32) entourant par sections le conduit de réfrigérant (28) dans la région de la première zone de contact (34).

3. Appareil de refroidissement (20) selon l'une quelconque des revendications précédentes, **caractérisé en ce qu'**une pâte thermoconductrice est prévue entre la plaque de contact (32) et le conduit de réfrigérant (28).

4. Appareil de refroidissement (20) selon l'une quelconque des revendications précédentes, **caractérisé en ce que** la plaque de contact (32) est formée de manière à être élastiquement déformable.

5. Appareil de refroidissement (20) selon la revendication 4, **caractérisé en ce que** la plaque de contact (32) s'étend dans la région de sa zone de contact (36) suivant un certain angle de 0,5° à 10°, de préférence de 1° à 3° par rapport au côté inférieur (18).

6. Appareil de refroidissement (20) selon la revendication 5, **caractérisé en ce que** le conduit de réfrigérant (28) s'étend au centre de la plaque de contact (32) et la plaque de contact (32) s'étend depuis le centre sur les deux côtés suivant un certain angle dans la direction du côté inférieur (18).

7. Appareil de refroidissement (20) selon l'une quelconque des revendications précédentes, **caractérisé en ce que** la plaque de contact (32) presse avec son côté avant ou arrière contre le conduit de réfrigérant (28), de préférence de manière élastiquement précontrainte.

8. Appareil de refroidissement (20) selon l'une quelconque des revendications précédentes, **caractérisé en ce que** la plaque de contact (32) a au moins une langue (38) qui est inclinée au niveau de son côté arrière, ladite langue étant guidée de manière coulissante dans un support dans le composant porteur (24).

9. Appareil de refroidissement (20) selon l'une quelconque des revendications précédentes, **caractérisé en ce que** le composant porteur (24) est formé sous forme de corps creux nervuré, dans lequel sont formées des consoles de préférence en forme de U (26) pour le conduit de réfrigérant (28).

10. Appareil de refroidissement (20) selon la revendication 9, **caractérisé en ce que** le composant porteur (24) a des nervures verticales (25).

11. Appareil de refroidissement (20) selon l'une quelconque des revendications précédentes, **caractérisé en ce que** le composant porteur (24) est formé de manière à être élastiquement déformable et présente des segments flexibles transversalement (58) s'étendant depuis les nervures, qui, dans l'état installé, sont fléchis élastiquement, lesdits segments flexibles (58) formant de préférence la partie supérieure du composant porteur (24) et étant espacés du côté inférieur de celui-ci.

12. Appareil de refroidissement (20) selon la revendication 11, **caractérisé en ce que** les segments flexibles (58) ont des entretoises élastiques (60) qui s'étendent obliquement au moins par sections, en particulier **en ce que** les entretoises (60) s'étendent depuis un point de support (62) sur le côté inférieur du composant porteur (24) jusqu'à une console (26) du conduit de réfrigérant (28).

13. Appareil de refroidissement (20) selon l'une quelconque des revendications précédentes, **caractérisé en ce que** le composant porteur (24) présente une extension de pressage (64) faisant saillie au niveau de la partie supérieure, par le biais de laquelle extension de pressage une force de pressage est exercée sur la plaque de contact (32), en particulier **en ce que** le côté inférieur de l'extension de pressage (64) est espacé du côté inférieur du composant porteur (24) de manière à être dévié élastiquement dans cette direction.

14. Appareil de refroidissement (20) selon l'une quelconque des revendications précédentes, **caractérisé en ce que** le composant porteur (24) est fabriqué en un matériau plastique, de préférence par moulage par injection ou par extrusion.

15. Appareil de refroidissement (20) selon l'une quelconque des revendications précédentes, **caractérisé en ce que** la base de refroidissement (22) présente au moins une paire de plaques de contact (32), ladite première plaque de contact (32) étant connectée à l'alimentation du conduit de réfrigérant (28) et ladite deuxième plaque de contact (32) étant connectée au retour du conduit de réfrigérant (28).

16. Appareil de refroidissement (20) selon l'une quelconque des revendications précédentes, **caractérisé en ce qu'**il est prévu un distributeur de réfrigérant (50), depuis lequel plusieurs conduits de réfrigérant (28) conduisent à leurs propres plaques de contact (32) et de là à un collecteur (52).

17. Appareil de refroidissement (20) selon l'une quelconque des revendications précédentes, **caractérisé en ce que** plusieurs composants porteurs (24) sont prévus, lesquels sont en particulier connectés positivement les uns aux autres.

18. Ensemble de batterie d'entraînement de véhicule (100) comportant une batterie d'entraînement de véhicule comprenant une pluralité de cellules de batterie (12), et un appareil de refroidissement (20) selon l'une quelconque des revendications précédentes, ledit appareil de refroidissement (20) pressant avec l'au moins une plaque de contact (32) contre le côté inférieur (18) de la batterie.

19. Ensemble de batterie d'entraînement de véhicule (100) selon la revendication 18, **caractérisé en ce que** seulement un composant porteur (24) s'étend immédiatement sur le côté inférieur, dans chaque cas, d'une cellule de batterie unique (12) ou d'un groupe de cellules de batterie (10), un groupe de cellules de batterie (10) étant une unité préfabriquée constituée d'une pluralité de cellules de batterie (12).

20. Ensemble de batterie d'entraînement de véhicule (100) selon la revendication 19, **caractérisé en ce qu'**une alimentation en réfrigérant et un retour de réfrigérant s'étendent en dessous de chaque groupe de cellules de batterie (10).

21. Ensemble de batterie d'entraînement de véhicule (100) selon l'une quelconque des revendications 18 à 20, **caractérisé en ce que** l'appareil de refroidissement (20) est monté sur un côté de la batterie à l'opposé des bornes électriques (16) de la batterie.

22. Ensemble de batterie d'entraînement de véhicule (100) selon l'une quelconque des revendications 18 à 21, **caractérisé en ce que** le composant porteur (24) est fixé à un boîtier de la batterie et est pressé en attachant des moyens contre le côté inférieur (18) de la batterie, la plaque de contact pressant élastiquement contre le côté inférieur (18) de la batterie, contre une plaque de base de la batterie ou contre les cellules de batterie (12).

23. Ensemble de batterie d'entraînement de véhicule (100) selon l'une quelconque des revendications 18 à 22, **caractérisé en ce que** la plaque de pressage (23) est prévue sous la base de refroidissement (22), ladite plaque de pressage (23) étant de préférence fixée à la batterie et étant utilisée pour déformer élastiquement la base de refroidissement (22) entre la batterie et la plaque de pressage (23).
